# EUROPÄISCHE PATENTSCHRIFT

(11) **EP 2 138 732 B1**
(45) Veröffentlichungstag und Bekanntmachung des Hinweises auf die Patenterteilung: **20.04.2016**
(21) Anmeldenummer: 09007386.7
(22) Anmeldetag: 04.06.2009
(51) Int. Cl.: F16D 1/08

(54) **Elektromotorischer Stellantrieb und Welle-Nabe-Verbindung**
Electric motor actuator and shaft-hub connection
Mécanisme de commande électromoteur et accouplement arbre-moyau

(30) Priorität: 24.06.2008 DE 102008029671
(43) Veröffentlichungstag der Anmeldung: 30.12.2009
(73) Patentinhaber: Brose Schliesssysteme GmbH & Co. KG, 42369 Wuppertal (DE)
(72) Erfinder: Stefanic, Josip, 51519 Odenthal (DE); Reinert, Jörg, 42899 Remscheid (DE)
(74) Vertreter: Gottschald, Jan

(56) Entgegenhaltungen:
- WO-A-2005/012748
- DE-A1-102006 046 459
- DE-U1- 8 715 654
- FR-A- 1 254 761
- GB-A- 1 490 253
- US-A- 4 452 591

## Beschreibung

Die Erfindung betrifft einen elektromotorischen Stellantrieb zur motorischen Verstellung eines Verstellelements in einem Kraftfahrzeug gemäß dem Oberbegriff von Anspruch 1 sowie eine Welle-Nabe-Verbindungsanordnung gemäß dem Oberbegriff von Anspruch 11.

Elektromotorische Stellantriebe der in Rede stehenden Art werden in Kraftfahrzeugen für eine Vielzahl von Anwendungszwecken eingesetzt. Ein besonderes Anwendungsfeld sind die Stellantriebe an Kraftfahrzeugtürverschlüssen in Zentralverriegelungsanlagen (Seitentüren, Hecktüren, Heckklappen). Viele andere Anwendungsfälle sind bekannt, von der Verstellung der Scheinwerfer über die Verstellung von Seitenspiegeln bis zu Kopfstützen- und Sitzhöhenverstellungen.

Ausgangspunkt für die Lehre der Erfindung ist ein elektromotorischer Stellantrieb mit einem Antriebsmotor und einer Antriebswelle, die gleichzeitig die Motorwelle ist (DE 197 25 414 A1). Der Antriebswelle ist zum Ausleiten der im Nennbetrieb auftretenden Antriebsmomente eine Welle-Nabe-Verbindungsanordnung zugeordnet, die eine antriebstechnische Verbindung zwischen der Antriebswelle und einer Getriebeschnecke gewährleistet. Zwischen der Schnecke und der Antriebswelle ist ein Mitnehmer angeordnet, der aus einem härteren Material besteht als die auf den Mitnehmer aufgesteckte Schnekke. Damit soll erreicht werden, dass hohe Drehmomente übertragen werden können, obwohl die Schnecke aus einem kostengünstigen Kunststoff besteht. Der Mitnehmer besteht dagegen vorzugsweise aus Metall. Die hohen Flächenpressungen zwischen Motorwelle und Mitnehmer werden auf ein für die Schnecke aus Kunststoff vertretbares Maß reduziert, indem die miteinander in Eingriff stehenden Flächen zwischen Mitnehmer und Schnecke mit erheblich größerem Durchmesser und damit wesentlich größeren Kraftübertragungsflächen auftreten.

Nachteilig bei dem bekannten elektromotorischen Stellantrieb ist einerseits die Tatsache, dass die Kosten für den Mitnehmer unverändert hoch sind und dass die Welle-Nabe-Verbindungsanordnung aus zwei unterschiedlichen Werkstoffen besteht, was ebenfalls zu erhöhten Kosten führt.

Ein weiterer bekannter elektromotorischer Stellantrieb (DE 103 60 419 A1) sieht vor, die Schnecke mit der Antriebswelle zu verkleben. Dies ist mit einem gewissen fertigungstechnischen Aufwand verbunden.

Schließlich ist ein weiterer elektromotorischer Stellantrieb (WO 2005/012748 A1) bekannt, bei dem eine Welle-Nabe-Verbindungsanordnung mit einer zwischengeschalteten, längsgeschlitzten Hülse zur Übertragung von Antriebsmomenten vorgesehen ist.

Der Erfindung liegt das Problem zugrunde, den bekannten elektromotorischen Stellantrieb derart auszugestalten und weiterzubilden, dass die Übertragung hoher Antriebsmomente bei geringen Herstellungskosten möglich ist.

Das obige Problem wird bei einem elektromotorischen Stellantrieb gemäß dem Oberbegriff von Anspruch 1 durch die Merkmale des kennzeichnenden Teils von Anspruch 1 gelöst.

Wesentlich ist die Erkenntnis, dass bei geeigneter Auslegung einer zweiteiligen Welle-Nabe-Verbindungsanordnung auf die Verwendung teurer Werkstoffe, insbesondere metallischer Werkstoffe, vollständig verzichtet werden kann.

Zunächst ist es vorschlagsgemäß vorgesehen, dass ein Schließring auf einen Basisring aufgesteckt ist. Der Basisring dient der Übertragung der im Nennbetrieb auftretenden Antriebsmomente und ist hierfür auf die Antriebswelle aufgesteckt.

Vorschlagsgemäß wird nun davon ausgegangen, dass die Übertragung der Antriebsmomente einen radialen Kraftschluss zwischen der Antriebswelle und dem Basisring erfordert. Dieser Kraftschluss kann beispielsweise erforderlich sein, um zur Übertragung der Antriebsmomente einen gewissen Reibschluss zwischen der Antriebswelle und dem Basisring herzustellen.

Der Basisring kann vorschlagsgemäß aus einem preisgünstigen Kunststoff bestehen, wobei insbesondere bei einer Antriebswelle mit kleinem Durchmesser damit gerechnet werden muss, dass es im Nennbetrieb zu einem Bruch des Basisrings kommt. Dieser Bruch umfasst in der Regel längs der Antriebswelle verlaufende Risse.

Der Bruch des Basisrings kann hier aber in Kauf genommen werden, da bei nicht mehr radial formstabilem Basisring der Schließring den für die Übertragung der Antriebsmomente erforderlichen Kraftschluss zwischen der Antriebswelle und dem Basisring sicherstellt. Man könnte auch sagen, dass bei der vorschlagsgemäßen Lösung der Basisring gewissermaßen "geopfert" wird, und im Falle des Bruchs nur noch der Weiterleitung der Kraft zwischen dem Schließring und der Antriebswelle dient.

Grundsätzlich vorteilhaft ist bei einer in obigem Sinne zweiteiligen Ausgestaltung einer Welle-Nabe-Verbindungsanordnung auch die Tatsache, dass ein im Basisring auftretender Riss nur bis zu der Grenzlinie zwischen dem Basisring und dem Schließring verläuft. Eine Schädigung des Schließrings ist damit in vorteilhafter Weise ausgeschlossen.

Bei der bevorzugten Ausgestaltung gemäß Anspruch 3 ist der Schließring radial kraftschlüssig auf den Basisring aufgesteckt und stellt somit den für die Übertragung der Antriebsmomente erforderlichen Kraftschluss zwischen der Antriebswelle und dem Basisring auch dann sicher, wenn der Basisring im Falle eines Bruchs nicht mehr formstabil ist.

Bei der bevorzugten Ausgestaltung gemäß Anspruch 5 ist es vorgesehen, dass sowohl der Basisring als auch der Schließring aus einem Kunststoffmaterial ausgestaltet sind. Beide Ringe lassen sich so vorteilhaft in einem einzigen Spritzgießvorgang fertigen.

Nach einer weiteren Lehre gemäß Anspruch 11, der eigenständige Bedeutung zukommt, wird die erläuterte Welle-Nabe-Verbindungsanordnung als solche beansprucht. Auf die betreffenden Ausführungen darf in vollem Umfange verwiesen werden.

Denkbar ist auch eine besondere Form einer Welle-Nabe-Verbindungsanordnung, die ein Basiselement wie einen Basisring und ein Schließelement wie einen Schließring aufweist. Wesentlich ist hier, dass Schließelement und Basiselement im unmontierten Zustand nur über eine Sollbruchstelle miteinander gekoppelt sind und dass zur Montage das Schließelement und das Basiselement in einer Schließbewegung unter Zerstörung der Sollbruchstelle gegeneinander verstellbar sind. Diese Schließbewegung bewirkt letztlich die Herstellung der Welle-Nabe-Verbindung, die kraft- oder formschlüssig ausgestaltet sein kann.

Interessant ist schließlich ein spezielles Verfahren zur Montage der letztgenannten Welle-Nabe-Verbindungsanordnung. Wesentlich ist dabei die oben erläuterte Schließbewegung unter Zerstörung der Sollbruchstelle zwischen dem Basiselement, insbesondere dem Basisring, und dem Schließelement, insbesondere dem Schließring.

Die Erfindung wird im Folgenden anhand einer lediglich Ausführungsbeispiele darstellenden Zeichnung näher erläutert. In der Zeichnung zeigt
- Fig. 1: einen vorschlagsgemäßen elektromotorischen Stellantrieb in einer Seitenansicht,
- Fig. 2: die Welle-Nabe-Verbindungsanordnung des Stellantriebs gemäß Fig. 1 a) im unmontierten Zustand und b) im montierten Zustand,
- Fig. 3: den Basisring und den Schließring der Ausführungsform gemäß Fig. 2 im unmontierten Zustand in einer teilweise geschnittenen, perspektivischen Darstellung,
- Fig. 4: einen vorschlagsgemäßen elektromotorischen Stellantrieb in einer weiteren Ausführungsform in einer Seitenansicht und
- Fig. 5: die Welle-Nabe-Verbindungsanordnung einer weiteren Ausführungsform a) im unmontierten Zustand und b) im montierten Zustand, jeweils in einer teilweise geschnittenen, perspektivischen Darstellung. Diese Anordnung gehört jedoch nicht zur Erfindung.

Die in der Zeichnung dargestellten elektromotorischen Stellantriebe können der motorischen Verstellung irgendeines Verstellelements in einem Kraftfahrzeug dienen. In besonders bevorzugter Ausgestaltung handelt es sich bei diesen Verstellelementen allerdings um Bestandteile eines Kraftfahrzeugschlosses oder eines Kraftfahrzeugtürantriebs.

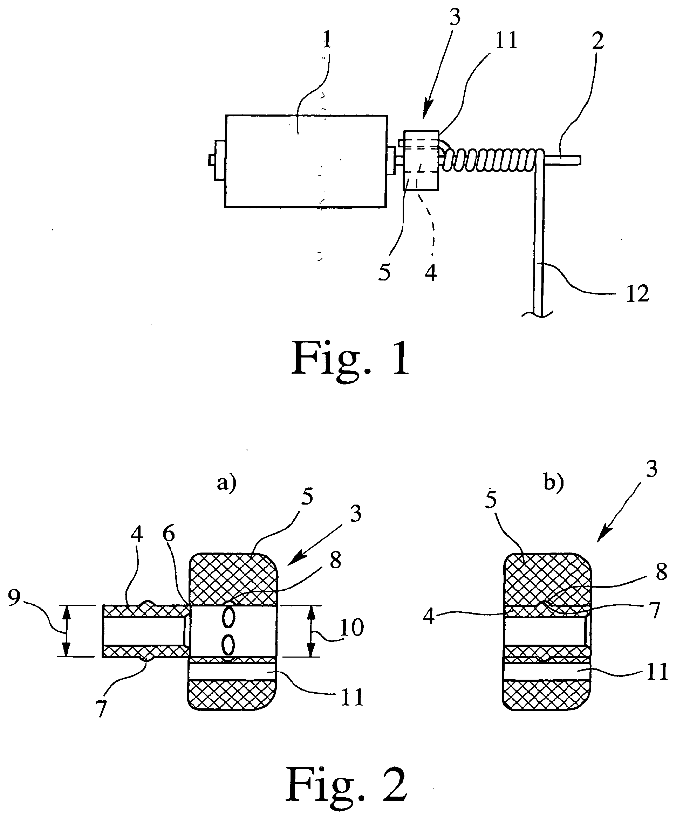

Bei dem in Fig. 1 dargestellten Ausführungsbeispiel ist der Stellantrieb nach Art eines Seilantriebs ausgestaltet. Der Stellantrieb ist mit einem Antriebsmotor 1 und einer dem Antriebsmotor 1 antriebstechnisch nachgeschalteten Antriebswelle 2 ausgestattet, wobei der Antriebswelle 2 zum Ausleiten von im Nennbetrieb auftretenden Antriebsmomenten eine Welle-Nabe-Verbindungsanordnung 3 zugeordnet ist. Unter Welle-Nabe-Verbindungsanordnung 3 sind alle Anordnungen zusammengefasst, die das Ausleiten von Antriebsmomenten von der Antriebswelle 2 ermöglichen.

Die Welle-Nabe-Verbindungsanordnung 3 umfasst vorschlagsgemäß einen Basisring 4 und einen Schließring 5. Der Schließring 5 ist auf den Basisring 4 aufgesteckt, wobei der Basisring 4 zur Übertragung der Antriebsmomente auf die Antriebswelle 2 aufgesteckt ist.

Die Aufgabe des Schließrings 5 besteht darin, so auf den Basisring 4 und/oder auf die Antriebswelle 2 einzuwirken, dass die Welle-Nabe-Verbindung im Nennbetrieb hält, auch wenn der Basisring 4 brechen und damit seine radiale Formstabilität verlieren sollte.

Der Schließring 5 ist vorzugsweise radial kraftschlüssig auf den Basisring 4 aufgesteckt. Dies bedeutet, dass nach dem Aufstecken zwischen dem Schließring 5 und dem Basisring 4 radiale Kräfte wirken.

Notwendig für die Übertragung der Antriebsmomente ist ein gewisser Kraftschluss zwischen dem Basisring 4 und der Antriebswelle 2. Dieser Kraftschluss dient beispielsweise der Erzeugung eines Reibschlusses zwischen der Antriebswelle 2 und dem Basisring 4. Dies wird noch erläutert. Denkbar ist aber auch, dass dieser radiale Kraftschluss während der Übertragung der Antriebsmomente benötigt wird, um den Basisring 4 in einem Formschluss mit der Antriebswelle 2 zu "halten". Dies ist in der Regel der Fall, wenn die Antriebswelle 2 mit einer Längsrändelung ausgestattet ist.

Wesentlich ist, dass bei nicht mehr radial formstabilem Basisring 4 der Schließring 5 den für die Übertragung der Antriebsmomente erforderlichen radialen Kraftschluss zwischen der Antriebswelle 2 und dem Basisring 4 sicherstellt.

Es ist erkannt worden, dass die radiale Formstabilität des Basisrings 4 für die Funktion der Welle-Nabe-Verbindung nicht unbedingt notwendig ist. Mit "radialer Formstabilität" ist vorliegend gemeint, dass der Basisring 4, sofern radial formstabil, zumindest einen gewissen Kraftschluss zu der Antriebswelle 2 selbst aufbringen kann. Dabei wird davon ausgegangen, dass die hierfür erforderliche Elastizität vorhanden ist.

Fehlt dem Basisring 4 durch einen Bruch des Basisrings 4, die radiale Formstabilität, so kann das Basiselement 4 den notwendigen Kraftschluss zur Antriebswelle 2 nicht selbst aufbringen. Vorschlagsgemäß ist aber hierfür gerade der Schließring 5 vorgesehen. Die Anordnung ist nun so getroffen, dass der resultierende Kraftschluss zwischen dem Basisring 4 und der Antriebswelle 2 für die Übertragung der im Nennbetrieb auftretenden Antriebsmomente ausreicht.

Bei der vorschlagsgemäßen Lösung wird stets davon ausgegangen, dass ein Kraftschluss zwischen dem Basisring 4 und der Antriebswelle 2 für die Übertragung der im Nennbetrieb auftretenden Antriebsmomente notwendig ist. Dies schließt nicht aus, dass zwischen dem Basisring 4 und der Antriebswelle 2 eine Mischung zwischen Kraft- und Formschluss herrscht, wie schon angesprochen wurde.

Vorzugsweise ist es so, dass die Übertragung der Antriebsmomente über einen Reibschluss zwischen der Antriebswelle 2 und dem Basisring 4 vorgesehen ist und dass der Reibschluss auf den radialen Kraftschluss zwischen der Antriebswelle 2 und dem Basisring 4 zurückgeht.

Dann ist weiter vorzugsweise der Schließring 5 radial kraftschlüssig auf den Basisring 4 aufgesteckt, wobei der Kraftschluss zwischen dem Schließring 5 und dem Basisring 4 so bemessen ist, dass auch bei nicht mehr radial formstabilem Basisring 4 der für die Übertragung der Antriebsmomente erforderliche radiale Kraftschluss zwischen der Antriebswelle 2 und dem Basisring 4 sichergestellt ist.

Dadurch, dass vorschlagsgemäß ein Bruch bzw. ein Reißen des Basisrings 4 in Kauf genommen werden kann, ohne dass die Welle-Nabe-Verbindung aufgelöst wird, ist eine besonders steife Ausgestaltung des Basisring 4 nicht mehr notwendig. Der Basisring 4 kann grundsätzlich aus dem gleichen Werkstoff ausgestaltet sein wie der Schließring 5.

Entsprechend ist es vorzugsweise vorgesehen, dass das Schubmodul und/oder das Elastizitätsmodul des Schließrings 5 identisch zu dem Schubmodul bzw. dem Elastizitätsmodul des Basisrings 4 ist. Grundsätzlich kann es sogar vorgesehen sein, dass das Schubmodul und/oder das Elastizitätsmodul des Schließrings 5 größer als das Schubmodul bzw. das Elastizitätsmodul des Basisrings 4 ist.

Eine besonders kostengünstige Variante lässt sich dadurch erreichen, dass sowohl der Basisring 4 als auch der Schließring 5 aus einem Kunststoff, vorzugsweise aus einem Polymer-Kunststoff, weiter vorzugsweise aus POM, ausgestaltet sind.

Die Fig. 2 a) und 3 zeigen den Basisring 4 und den Schließring 4 im unmontierten Zustand. Es handelt sich hier wie oben erläutert um Kunststoffteile, die vorzugsweise aus identischem Material bestehen. Ferner ist es vorgesehen, dass der Basisring 4 und der Schließring 5 im unmontierten Zustand nur über eine Sollbruchstelle 6 miteinander verbunden sind und zur Montage unter Zerstörung der Sollbruchstelle 6 ineinandersteckbar sind. Vorzugsweise sind der Basisring 4, der Schließring 5 und die Sollbruchstelle 6 im KunststoffSpritzgießverfahren hergestellt, wobei sich die Sollbruchstelle 6 auf einfache Weise nach Art eines dünnen Films o. dgl. ausgestalten lässt. Durch die Verbindung über die Sollbruchstelle 6 lassen sich der Basisring 4 und der Schließring 5 auf logistisch optimale Weise dem Montagevorgang zuführen.

Grundsätzlich ist es denkbar, das Spitzgießverfahren als Zwei-K-Spritzgießverfahren auszugestalten, so dass der Basisring 4 in einem anderen Werkstoff ausgestaltet sein kann als der Schließring 5. Einfacher und vor allem kostengünstiger ist allerdings die Ausgestaltung, bei der beide Ringe 4, 5 in dem gleichen Werkstoff ausgestaltet sind.

Das obige Ineinanderstecken von Basisring 4 und Schließring 5 ergibt sich aus einer Zusammenschau der Fig. 2 a) und 2b). Der Sinn dieses Montageschritts besteht hier und vorzugsweise darin, dass beim Ineinanderstecken von Basisring 4 und Schließring 5 ein Kraftschluss zwischen dem Basisring 4 und dem Schließrings 5 entsteht. Dies lässt sich beispielsweise dadurch erreichen, dass das Ineinanderstecken von Basisring 4 und Schließring 5 unter einer Presspassung erfolgt. Denkbar ist aber auch, dass eine Ausformung nach Art eines Keilgetriebes zwischen dem Basisring 4 und dem Schließring 5 vorgesehen ist.

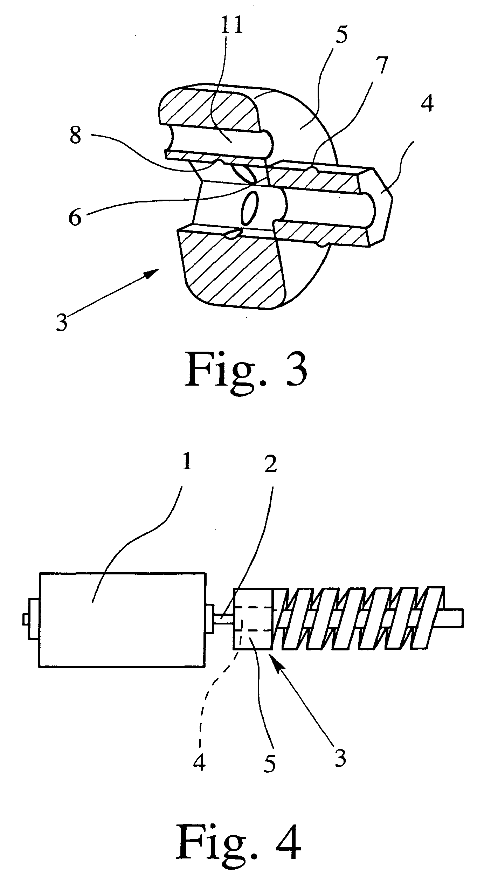

Es lässt sich der Darstellung in Fig. 3 entnehmen, dass der Basisring nach außen weisende Ausformungen 7 aufweist, die beim Einstecken des Basisrings 4 in den Schließring 5 in zugeordnete Ausnehmungen 8 im Schließring 5 einrasten. So ist eine sichere Positionierung des Basisring 4 gewährleistet, soweit dies aufgrund der angesprochenen Presspassung überhaupt erforderlich ist.

Mit der in den Fig. 2 und 3 dargestellten Auslegung von Basisring 4 und Schließring 5 lassen sich hohe Antriebsmomente übertragen, obwohl beide Ringe 4, 5 nur in Kunststoff ausgeführt sind und obwohl es sich bei der Antriebswelle 2 um eine vergleichsweise dünne Antriebswelle 2 handelt. Dies ist selbst nach einem Bruch des Basiselements 4 möglich, weil hier und vorzugsweise der oben erläuterte Kraftschluss zwischen Basisring 4 und Schließring 5 vorgesehen ist.

Im einzelnen ist es vorzugsweise vorgesehen, dass der Innendurchmesser 9 des Basisrings 4, der der Aufnahme der Antriebswelle 2 dient, weniger als die Hälfte des Innendurchmessers 10 des Schließrings 5, der zur Aufnahme des Basisrings 4 dient, beträgt.

Durch die vorschlagsgemäße Lösung kann die Antriebswelle 2 einen besonders kleinen Außendurchmesser aufweisen, ohne dass es zu Problemen beim Ausleiten der Antriebsmomente kommt. Vorzugsweise liegt der Außendurchmesser der Antriebswelle 2 in einem Bereich zwischen etwa 1,5 und etwa 3,0 mm. Weiter vorzugsweise liegt der Außendurchmesser der Antriebswelle 2 bei etwa 2,0 mm.

Je nach Anwendungsfall, insbesondere je nach zu erwartenden Antriebsmomenten, kann es sinnvoll sein, dass der Basisring 4 mit der Antriebswelle 2 zur Übertragung von Antriebsmomenten formschlüssig gekoppelt ist. Hierfür sind aus dem Stand der Technik zahlreiche Varianten bekannt.

Bei dem in den Fig. 1 bis 3 dargestellten und insoweit bevorzugten Ausführungsbeispiel ist ferner der Schließring 5 mit dem Basisring 4 zur Übertragung von Antriebsmomenten ebenfalls formschlüssig gekoppelt. Dieser Formschluss lässt sich im Falle der Ausgestaltung der beiden Ringe 4, 5 in Kunststoff besonders einfach realisieren.

Mit der vorschlagsgemäßen Lösung lässt sich die Welle-Nabe-Verbindungsanordnung 3 ohne weiteres so auslegen, dass sich der Basisrings 4 im Nennbetrieb im Bereich seiner maximal zulässigen Bruchdehnung befindet, und zwar ohne dass die ordnungsgemäße Arbeitsweise des Stellantriebs gefährdet ist. Dies kann wieder zu einer ganz erheblichen Einsparung insbesondere im Bereich der Materialkosten führen. Dabei ist es vorzugsweise so, dass sich der Basisring 4 im Leerlaufbetrieb, also wenn keine Drehmomentübertragung vorgesehen ist, unterhalb seiner maximal zulässigen Bruchdehnung befindet. Damit ist sichergestellt, dass es nicht schon während der Montage zu einem Bruch des Basisrings 4 kommt, der durch den Schließring 5 noch nicht ausgeglichen werden kann.

In besonders bevorzugter Ausgestaltung ist der Basisring 4 grundsätzlich radial formstabil ausgebildet, so dass er den notwendigen radialen Kraftschluss mit der Antriebswelle 2 im wesentlichen selbst aufbringt. Anders ist es nur, wenn ein Bruch des Basisrings 4 vorliegt. Wie oben erläutert, kann der Basisring 4 den notwendigen radialen Kraftschluss dann in der Regel nicht mehr aufbringen.

Der Begriff "Ring" ist vorliegend besonders weit zu verstehen. Von diesem Begriff sind neben ringförmigen Ausgestaltungen im engen Sinne auch hülsenförmige Ausgestaltungen jeglicher Auslegung umfasst.

Vorzugsweise ist der Basisring 4 wie oben hülsenförmig ausgestaltet, wobei der Basisring 4 dann weiter vorzugsweise eine im Wesentlichen geschlossene Wandung aufweist und damit grundsätzlich radial formstabil ist.

Es kann aber auch vorgesehen sein, dass der Basisring 4 bewusst nicht form-stabil ausgebildet ist. Dies lässt sich beispielsweise dadurch erreichen, dass der Basisring 4 über einen Umfang verteilte Längsschlitze aufweist. Letztlich ist die Formstabilität des Basisrings 4 mit der vorschlagsgemäßen Lösung ja nicht unbedingt notwendig.

Die eigentliche Funktion der Welle-Nabe-Verbindungsanordnung 3 besteht darin, Antriebsmomente in Richtung des jeweiligen Verstellelements weiterzuleiten. Hierfür ist es vorgesehen, dass der Schließring 5 oder der Basisring 4 mit einem Getriebeelement 11, vorzugsweise mit einer Schnecke, einem Stirnrad, einer Seilrolle, einem Seilmitnehmer o. dgl. verbunden ist oder Bestandteil eines dieser Getriebeelemente 11 ist.

Bei dem in den Fig. 1 bis 3 dargestellten Ausführungsbeispiel ist der Schließring 5 gleichzeitig das Getriebeelement 11 "Seilmitnehmer" eines Seilantriebs. In Fig. 2 ist gezeigt, dass das Seil 12 des Seilantriebs durch eine Öffnung im Schließring 5 durchgeführt ist. In dieser Durchführung ist das Seil 12 regelmäßig verklebt.

Grundsätzlich kann es auch vorgesehen sein, dass das oben erwähnte Ineinanderstecken von Basisring 4 und Schließring 5 zu einer Verjüngung der Durchführung für das Seil 12 führt, so dass mit der Montage der Welle-Nabe-Verbindungsanordnung 3 quasi automatisch eine Fixierung des Seils 12 des Seilantriebs realisierbar ist.

Eine besonders bevorzugte Ausgestaltung ergibt sich dadurch, dass das Getriebeelement 11 zumindest zum Teil im Kunststoff-Spritzgießverfahren hergestellt ist und dass das Seil 12 zu dessen Befestigung vom Kunststoffmaterial des Getriebeelements 11 umspritzt ist.

Die Welle-Nabe-Verbindungsanordnung 3 wird vorliegend, wie oben angesprochen, auch als solche beansprucht. Auf alle auf die Welle-Nabe-Verbindungsanordnung 3 gerichteten Erläuterungen darf verwiesen werden.

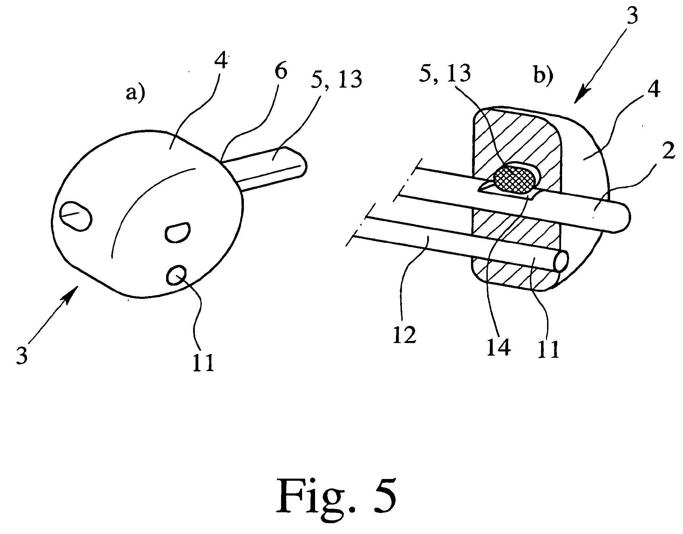

In einer nicht zur Erfindung gehörenden Ausgestaltung ist ein Schließelement 5 als Passstift 13 ausgestaltet, der quer zur Erstreckung der Antriebswelle 2 ausgerichtet ist und der im montierten Zustand in eine Ausnehmung 14, vorzugsweise in einen sogenannten "D-Schliff", der Antriebswelle 2 eingreift. Dies ist in Fig. 5 dargestellt. Fig. 5 a) zeigt die Welle-Nabe-Verbindungsanordnung 3 im nicht montierten Zustand. In diesem Zustand ist der Passstift 13 über die Sollbruchstelle 6 mit dem Basiselement 4 verbunden. Fig. 5 b) zeigt den montierten Zustand, in dem der Passstift 13 in das Basiselement 4 eingesteckt ist.

Hier und vorzugsweise ist der Passstift 13 als Kunststoffteil ausgestaltet. Denkbar ist aber auch, dass den Passstift 13 als Metallstift auszugestalten. Andere Varianten sind denkbar.

## Patentansprüche

1. Elektromotorischer Stellantrieb zur motorischen Verstellung eines Verstellelements in einem Kraftfahrzeug, mit einem Antriebsmotor (1) und einer dem Antriebsmotor (1) antriebstechnisch nachgeschalteten Antriebswelle (2), wobei der Antriebswelle (2) zum Übertragen der im Nennbetrieb auftretenden Antriebsmomente eine Welle-Nabe-Verbindungsanordnung (3) zugeordnet ist, **dadurch gekennzeichnet,**
**dass** die Welle-Nabe-Verbindungsanordnung (3) einen Basisring (4) und einen Schließring (5) aufweist, dass der Schließring (5) auf den Basisring (4) aufgesteckt ist, dass der Basisring (4) zur Übertragung der Antriebsmomente auf die Antriebswelle (2) aufgesteckt ist, dass die Übertragung der Antriebsmomente einen radialen Kraftschluss zwischen der Antriebswelle (2) und dem Basisring (4) erfordert und dass bei bruchbedingt nicht mehr radial formstabilem Basisring (4) derart, dass der Basisring (4) den für die Übertragung der Antriebsmomente erforderlichen Kraftschluss nicht selbst aufbringen kann, der Schließring (5) den für die Übertragung der Antriebsmomente erforderlichen radialen Kraftschluss zwischen der Antriebswelle und dem (2) Basisring (4) sicherstellt.

2. Elektromotorischer Stellantrieb nach Anspruch 1, **dadurch gekennzeichnet, dass** die Übertragung der Antriebsmomente über einen Reibschluss zwischen der Antriebswelle (2) und dem Basisring (4) vorgesehen ist und dass der Reibschluss auf den radialen Kraftschluss zwischen der Antriebswelle (2) und dem Basisring (4) zurückgeht.

3. Elektromotorischer Stellantrieb nach Anspruch 1 oder 2, **dadurch gekennzeichnet, dass** der Schließring (5) radial kraftschlüssig auf den Basisring (4) aufgesteckt ist und dass der Kraftschluss zwischen dem Schließring (5) und dem Basisring (4) so bemessen ist, dass auch bei bruchbedingt nicht mehr radial formstabilem Basisring (4) der für die Übertragung der Antriebsmomente erforderliche radiale Kraftschluss zwischen der Antriebswelle (2) und dem Basisring (4) sichergestellt ist.

4. Elektromotorischer Stellantrieb nach einem der vorhergehenden Ansprüche, **dadurch gekennzeichnet, dass** das Schubmodul und/oder das Elastizitätsmodul des Schließrings (5) identisch zu dem Schubmodul bzw. dem Elastizitätsmodul des Basisrings (4) ist, oder, dass das Schubmodul und/oder das Elastizitätsmodul des Schließrings (5) größer als das Schubmodul bzw. das Elastizitätsmodul des Basisrings (4) ist.

5. Elektromotorischer Stellantrieb nach einem der vorhergehenden Ansprüche, **dadurch gekennzeichnet, dass** sowohl der Basisring (4) als auch der Schließring (5) aus einem Kunststoff, vorzugsweise aus einem Polymer-Kunststoff, vorzugsweise aus POM, ausgestaltet sind.

6. Elektromotorischer Stellantrieb nach einem der vorhergehenden Ansprüche, **dadurch gekennzeichnet, dass** der Basisring (4) und der Schließring (5) im unmontierten Zustand nur über eine Sollbruchstelle (6) miteinander verbunden sind und zur Montage unter Zerstörung der Sollbruchstelle (6) ineinandersteckbar sind, vorzugsweise, dass der Basisring (4), der Schließring (5) und die Sollbruchstelle (6) im Kunststoff-Spritzgießverfahren hergestellt sind und die Sollbruchstelle (6) nach Art eines dünnen Films o. dgl. ausgestaltet ist.

7. Elektromotorischer Stellantrieb nach einem der vorhergehenden Ansprüche, **dadurch gekennzeichnet, dass** der Basisring (4) einen Innendurchmesser (9) zur Aufnahme der Antriebswelle (2) und der Schließring (5) einen Innendurchmesser (10) zur Aufnahme des Basisring (4) aufweist, vorzugsweise, dass der Innendurchmesser (9) des Basisrings (4) weniger als die Hälfte des Innendurchmessers (10) des Schließrings (5) beträgt.

8. Elektromotorischer Stellantrieb nach einem der vorhergehenden Ansprüche, **dadurch gekennzeichnet, dass** der Außendurchmesser der Antriebswelle (2) in einem Bereich zwischen etwa 1,5 und etwa 3,0 mm, vorzugsweise bei etwa 2,0 mm liegt.

9. Elektromotorischer Stellantrieb nach einem der vorhergehenden Ansprüche, **dadurch gekennzeichnet, dass** der Basisring (4) mit der Antriebswelle (2) zur Übertragung von Antriebsmomenten formschlüssig gekoppelt ist, und/oder, dass der Schließring (5) mit dem Basisring (4) insbesondere zur Übertragung von Antriebsmomenten formschlüssig gekoppelt ist.

10. Elektromotorischer Stellantrieb nach einem der vorhergehenden Ansprüche, **dadurch gekennzeichnet, dass** sich der Basisring (4) im Nennbetrieb im Bereich seiner maximal zulässigen Bruchdehnung befindet.

11. Welle-Nabe-Verbindungsanordnung zur antriebstechnischen Ankopplung einer Antriebswelle (2),
**dadurch gekennzeichnet,**
**dass** ein Basisring (4) und ein Schließring (5) vorgesehen sind, dass der Schließring (5) auf den Basisring (4) aufgesteckt ist, dass der Basisring (4) zur Übertragung der Antriebsmomente auf die Antriebswelle (2) aufsteckbar ist, dass die Übertragung der Antriebsmomente einen radialen Kraftschluss zwischen der Antriebswelle (2) und dem Basisring (4) erfordert und dass bei bruchbedingt nicht mehr radial formstabilem Basisring (4) derart, dass der Basisring (4) den für die Übertragung der Antriebsmomente erforderlichen Kraftschluss nicht selbst aufbringen kann, der Schließring (5) den für die Übertragung der Antriebsmomente erforderlichen radialen Kraftschluss zwischen der Antriebswelle (2) und dem Basisring (4) sicherstellt.

## Claims

1. Electric motor actuating drive for the motorized adjustment of an adjusting element in a motor vehicle, having a drive motor (1) and a drive shaft (2) which is connected downstream of the drive motor (1) in terms of drive, the drive shaft (2) being assigned a shaft/hub connecting arrangement (3) for the transmission of the drive torques which occur during rated operation, **characterized in that** the shaft/hub connecting arrangement (3) has a base ring (4) and a closing ring (5), **in that** the closing ring (5) is plugged onto the base ring (4), **in that** the base ring (4) is plugged onto the drive shaft (2) for the transmission of the drive torques, **in that** the transmission of the drive torques requires a radial non-positive connection between the drive shaft (2) and the base ring (4), and **in that**, in the case of a base ring (4) which is no longer radially dimensionally stable owing to fracture in such a way that the base ring (4) cannot itself apply the non-positive connection which is required for the transmission of the drive torques, the closing ring (5) ensures the radial non-positive connection between the drive shaft (2) and the base ring (4), which radial non-positive connection is required for the transmission of the drive torques.

2. Electric motor actuating drive according to Claim 1, **characterized in that** the transmission of the drive torques is provided via a frictional connection between the drive shaft (2) and the base ring (4), and **in that** the frictional connection traces back to the radial non-positive connection between the drive shaft (2) and the base ring (4).

3. Electric motor actuating drive according to Claim 1 or 2, **characterized in that** the closing ring (5) is plugged in a radially non-positive manner onto the base ring (4), and **in that** the non-positive connection between the closing ring (5) and the base ring (4) is dimensioned in such a way that, even in the case of a base ring (4) which is no longer radially dimensionally stable owing to fracture, the radial non-positive connection between the drive shaft (2) and the base ring (4) is ensured, which radial non-positive connection is required for the transmission of the drive torques.

4. Electric motor actuating drive according to one of the preceding claims, **characterized in that** the shear modulus and/or the modulus of elasticity of the closing ring (5) are/is identical to the shear modulus and the modulus of elasticity of the base ring (4), or **in that** the shear modulus and/or the modulus of elasticity of the closing ring (5) are/is greater than the shear modulus and the modulus of elasticity of the base ring (4).

5. Electric motor actuating drive according to one of the preceding claims, **characterized in that** both the base ring (4) and the closing ring (5) are configured from a plastic, preferably from a polymer plastic, preferably from POM.

6. Electric motor actuating drive according to one of the preceding claims, **characterized in that** the base ring (4) and the closing ring (5) are connected to one another only via a predetermined fracture point (6) in the non-assembled state and can be plugged into one another for assembly with destruction of the predetermined fracture point (6), and preferably **in that** the base ring (4), the closing ring (5) and the predetermined fracture point (6) are manufactured using the plastic injection moulding process and the predetermined fracture point (6) is configured in the manner of a thin film or the like.

7. Electric motor actuating drive according to one of the preceding claims, **characterized in that** the base ring (4) has an internal diameter (9) for receiving the drive shaft (2) and the closing ring (5) has an internal diameter (10) for receiving the base ring (4), and preferably **in that** the internal diameter (9) of the base ring (4) is less than half the internal diameter (10) of the closing ring (5).

8. Electric motor actuating drive according to one of the preceding claims, **characterized in that** the external diameter of the drive shaft (2) lies in a range between approximately 1.5 and approximately 3.0 mm, preferably at approximately 2.0 mm.

9. Electric motor actuating drive according to one of the preceding claims, **characterized in that** the base ring (4) is coupled in a positively locking manner to the drive shaft (2) for the transmission of drive torques, and/or **in that** the closing ring (5) is coupled in a positively locking manner to the base ring (4), in particular for the transmission of drive torques.

10. Electric motor actuating drive according to one of the preceding claims, **characterized in that** the base ring (4) is in the range of its maximum permissible elongation at failure during nominal operation.

11. Shaft/hub connecting arrangement for drive-coupling a drive shaft (2), **characterized in that** a base ring (4) and a closing ring (5) are provided, **in that** the closing ring (5) is plugged onto the base ring (4), **in that** the base ring (4) can be plugged onto the drive shaft (2) for the transmission of the drive torques, **in that** the transmission of the drive torques requires a radial non-positive connection between the drive shaft (2) and the base ring (4), and **in that**, in the case of a base ring (4) which is no longer radially dimensionally stable owing to fracture in such a way that the base ring (4) cannot itself apply the non-positive connection which is required for the transmission of the drive torques, the closing ring (5) ensures the radial non-positive connection between the drive shaft (2) and the base ring (4), which radial non-positive connection is required for the transmission of the drive torques.

## Revendications

1. Entraînement de réglage par moteur électrique, permettant de déplacer à l'aide d'un moteur un élément de déplacement d'un véhicule automobile, l'entraînement présentant un moteur d'entraînement (1) et un arbre d'entraînement (2) relié à la suite du moteur d'entraînement (1) dans la direction d'entraînement,
un ensemble (3) de liaison arbre-bec étant associé à l'arbre d'entraînement (2) pour transmettre les couples d'entraînement qui sont formés en fonctionnement nominal,
**caractérisé en ce que**
l'ensemble (3) de liaison arbre-bec présente une bague de base (4) et une bague de fermeture (5),
**en ce que** la bague de fermeture (5) est enfichée sur la bague de base (4),
**en ce que** la bague de base (4) est enfichée sur l'arbre d'entraînement (2) pour transférer les couples d'entraînement,
**en ce que** le transfert des couples d'entraînement définit une mise en correspondance mécanique radiale entre l'arbre d'entraînement (2) et la bague de base (4) et **en ce que** si la bague de base (4) ne peut plus appliquer elle-même la mise en correspondance mécanique nécessaire pour le transfert des couples d'entraînement parce que la bague de base (4) n'a plus une forme stable dans la direction radiale pour cause de rupture, la bague de fermeture (5) assure la mise en correspondance mécanique dans la direction radiale entre l'arbre d'entraînement (2) et la bague de base (4) nécessaire pour le transfert des couples d'entraînement.

2. Entraînement de réglage par moteur électrique selon la revendication 1, **caractérisé en ce que** le transfert des couples d'entraînement est prévu par l'intermédiare d'une mise en correspondance par frottement entre l'arbre d'entraînement (2) et la bague de base (4) et **en ce que** la mise en correspondance par frottement revient à la mise en correspondance mécanique dans la direction radiale entre l'arbre d'entraînement (2) et la bague de base (4).

3. Entraînement de réglage par moteur électrique selon les revendications 1 ou 2, **caractérisé en ce que** la bague de fermeture (5) est enfchée en correspondance mécanique radiale sur la bague de base (4) et **en ce que** la mise en correspondance mécanique entre la bague de fermeture (5) et la bague de base (4) est dimensionnée de telle sorte que même au cas où la bague de base (4) n'a plus une forme stable dans la direction radiale pour cause de rupture, la mise en correspondance mécanique dans la direction radiale, nécessaire pour le transfert des couples d'entraînement, est assurée entre l'arbre d'entraînement (2) et la bague de base (4).

4. Entraînement de réglage par moteur électrique selon les revendications précédentes, **caractérisé en ce que** le module de poussée ou le module d'élasticité de la bague de fermeture (5) sont identiques respectivement au module de poussée ou au module d'élasticité de la bague de base (4) ou **en ce que** le module de poussée et/ou le module d'élasticité de la bague de fermeture (5) sont supérieurs respectivement au module de poussée et au module d'élasticité la bague de base (4).

5. Entraînement de réglage par moteur électrique selon l'une des revendications précédentes, **caractérisé en ce que** tant la bague de base (4) que la bague de fermeture (5) sont réalisées en matière synthétique, de préférence en une matière synthétique polymère et de préférence en POM.

6. Entraînement de réglage par moteur électrique selon l'une des revendications précédentes, **caractérisé en ce qu'**à l'état non monté, la bague de base (4) et la bague de fermeture (5) sont reliées l'une à l'autre uniquement par un emplacement (6) de rupture préférentielle et peuvent être enfichées l'une dans l'autre pour le montage en rompant l'emplacement (6) de rupture préférentielle, de préférence en formant la bague de base (4), la bague de fermeture (5) et l'emplacement (6) de rupture préférentielle par une opération de moulage par injection de matière synthétique et en configurant l'emplacement (6) de rupture préférentielle en film mince ou similaires.

7. Entraînement de réglage par moteur électrique selon l'une des revendications précédentes, **caractérisé en ce que** la bague de base (4) présente un diamètre intérieur (9) qui permet de reprendre l'arbre d'entraînement (2) et **en ce que** la bague de fermeture (5) présente un diamètre intérieur (10) qui permet de reprendre la bague de base (4), et de préférence **en ce que** le diamètre intérieur (9) de la bague de base (4) représente moins que la moitié du diamètre intérieur (10) de la bague de fermeture (5).

8. Entraînement de réglage par moteur électrique selon l'une des revendications précédentes, **caractérisé en ce que** le diamètre extérieur de l'arbre d'entraînement (2) est compris dans la plage de 1,5 à 3,0 mm et de préférence est d'environ 2,0 mm.

9. Entraînement de réglage par moteur électrique selon l'une des revendications précédentes, **caractérisé en ce que** la bague de base (4) est accouplée en correspondance géométrique à l'arbre d'entraînement (2) pour permettre le transfert de couples d'entraînement et/ou **en ce que** la bague de fermeture (5) est accouplée en correspondance géométrique avec la bague de base (4), en particulier pour le transfert de couples d'entraînement.

10. Entraînement de réglage par moteur électrique selon l'une des revendications précédentes, **caractérisé en ce qu'**en fonctionnement nominal, la bague de base (4) est au niveau de son allongement maximal admissible à la rupture.

11. Ensemble de liaison d'arbre et de bec destiné à un accouplement à entraînement sur un arbre d'entraînement (2),
**caractérisé en ce que**
une bague de base (4) et une bague de fermeture (5) sont prévues,
**en ce que** la bague de fermeture (5) est enfichée sur la bague de base (4),
**en ce que** la bague de base (4) peut être enfichée sur l'arbre d'entraînement (2) pour transférer les couples d'entraînement,
**en ce que** le transfert des couples d'entraînement définit une mise en correspondance mécanique radiale entre l'arbre d'entraînement (2) et la bague de base (4) et **en ce que** si la bague de base (4) ne peut plus appliquer elle-même la mise en correspondance mécanique nécessaire pour le transfert des couples d'entraînement parce que la bague de base (4) n'a plus une forme stable dans la direction radiale pour cause de rupture, la bague de fermeture (5) assure la mise en correspondance mécanique dans la direction radiale entre l'arbre d'entraînement (2) et la bague de base (4) nécessaire pour le transfert des couples d'entraînement.
